# EUROPÄISCHE PATENTSCHRIFT

(11) **EP 0 727 277 B1**
(45) Veröffentlichungstag und Bekanntmachung des Hinweises auf die Patenterteilung: **25.11.1998**
(21) Anmeldenummer: 96102337.1
(22) Anmeldetag: 16.02.1996
(51) Int. Cl.: B23Q 41/02, B23Q 7/03

(54) **Verfahren und Vorrichtung zum Vormontieren und -bearbeiten von Rahmenprofilen**
Method and device for preassembling and premachining frame sections
Procédé et appareil pour préassembler et prétraiter des éléments de profilés

(30) Priorität: 16.02.1995 DE 19505194
(43) Veröffentlichungstag der Anmeldung: 21.08.1996
(73) Patentinhaber: Pax GmbH, D-55218 Ingelheim (DE)
(72) Erfinder: Thömmes, Heinz, 54426 Malborn (DE); Klein, Alfred, 54528 Salmtal (DE); Anker, Horst, 54340 Köwerich (DE); Brosius, Detlef, 54411 Hermeskeil (DE); Thömmes, Wolfgang, 54424 Lückenburg (DE); Konz, Peter, 54439 Palzem (DE)
(74) Vertreter: Eichler, Peter, Dipl.-Ing.

(56) Entgegenhaltungen:
- EP-A- 0 208 904
- EP-A- 0 252 066
- DE-A- 3 013 398
- DE-A- 3 715 518

## Beschreibung

Die Erfindung betrifft ein Verfahren zum Vormontieren und -bearbeiten von Rahmenprofilen gemäß dem Oberbegriff des Patentanspruchs 1 und eine Vorrichtung zur Durchführung des Verfahrens gemäß dem Oberbegriff des Patentanspruchs 13.

Die Oberbegriffe der Patentansprüche 1 und 13 sind aus der DE-A-37 15 518 hergeleitet.

Aus dieser Schrift ist eine Vorrichtung zur schlitzfräsenden und bohrenden Bearbeitung von Kunststoff-Fensterprofilen bekannt. Dort werden die einzelnen Profilholme auf einer Grundplatte positioniert und die Position der Profilstirnseiten erfaßt.

Aus der Position wird dann über eine Steuereinrichtung ein Steuerbefehl an die Fräs- und Bohragregate gegeben.

Mit dieser Vorrichtung können daher nur die längenabhängigen Bohr- und Fräspositionen eines Profilholms bearbeitet werden. Zur Bearbeitung von Profilholmen ohne vorbestimmte Reihenfolge ist diese Vorrichtung nicht geeignet. Entwässerungslöcher kommen zum Beispiel nur an den unteren Profilholmen vor, Scherenbeschläge werden nur an den oberen Profilholmen angebracht.

Die Längenerfassung allein ist daher kein hinreichendes Kriterium für die Bearbeitung von Profilholmen unterschiedlicher Positionen im späteren Fenster.

Bei der Herstellung von metallisch verstärkten Kunststoff-Fensterrahmen werden die zu einem solchen Rahmen zusammenzubauenden Kunststoff-Profile von einem viele Meter langen Kunststoff-Profilstrang abgetrennt wobei die dem einzelnen Rahmen entsprechenden Längen unmittelbar aufeinanderfolgen. Sodann läßt man die Einzelprofile eine Bearbeitungsvorrichtung passieren, wo sie während ihrer Förderbewegung die erforderliche Bohr- oder Schraubbearbeitung erfahren. Das vorbeschriebene Abtrennen der für ein zusammenzubauendes Fenster individuell längenmäßig passenden und unmittelbar aufeinanderfolgenden Rahmenprofile bedingt erheblichen Verschnitt. Dieser Verschnitt kann zwar verringert werden, wenn der Rest eines Profilstrangs nicht mehr die erforderliche Länge hat, andererseits aber noch lang genug ist, um daraus ein kürzeres Rahmenprofil herzustellen. Dann jedoch muß das Verschnittstück im richtigen Zeitpunkt der Trennvorrichtung zugeführt werden, wobei der Zeitpunkt bestimmt wird durch das zufällige Auftreten eines zufällig passenden Fensterrahmens.

Der Erfindung liegt daher die Aufgabe zugrunde, ein Verfahren sowie eine zu seiner Durchführung dienende Vorrichtung zu schaffen, womit unabhängig von der Reihenfolge der Rahmenprofile metallisch verstärkte aus Kunststoff bestehende Fensterrahmenprofile bei gleichzeitiger Minimierung der bei ihrem Ablängen eintretenden Schnittverluste präzise vormontiert und -bearbeitet werden können.

Diese Aufgabe wird nach der vorliegenden Erfindung gelöst, durch die Merkmale des Anspruchs 1. Eine hierfür geeignete Vorrichtung ergibt sich aus den Merkmalen des Anspruchs 13. Aus der Erfindung ergibt sich der Vorteil, daß jedes einzelne der Rahmenprofile alle zur nachfolgenden Bearbeitung notwendigen Werkzeuginformationen unmittelbar und unauslöschlich bei sich trägt, Verwechslungen werden ausgeschlossen, Ausschuß wird vermieden, dennoch ist die präzise Einhaltung der Bearbeitungsdaten gewährleistet.

Zu diesem Zweck werden beispielsweise bei Tagesbeginn sämtliche Aufträge so aufbereitet, daß mittels eines Rechenprogramms die Reihenfolge der abzulängenden Rahmenprofile lediglich im Sinne einer Verschnittminimierung und unabhängig von der Zugehörigkeit zu bestimmten Rahmen festgelegt wird

Da allerdings auf diese Weise eine praktisch zufällige Reihenfolge der Rahmenprofile entsteht, muß jedes der Rahmenprofile seine Kenndaten aufgeprägt bekommen.

Hierzu dienen Aufkleber mit Strich-Codierungen, welche numerisch einfach erfaßbar sind und eine hinreichend große Anzahl an Variationen für alle vorkommenden Bearbeitungsmöglichkeiten zulassen.

Diese Informationen müssen dann im Verlauf des Bearbeitungsfortschritts einzeln in Maschinenbefehle umgesetzt werden, so daß jedes Rahmenprofil die ihm zugedachte Bearbeitung erfährt.

Nach der Vorbearbeitung müssen die zunächst noch nicht sortierten Rahmenprofile zwar noch so sortiert werden, daß ihre Zuordnung für einen jeweils bestimmten Rahmen möglich ist.

Hierfür können Sortierablagen Verwendung finden, auf denen die ankommenden und fertig vorbearbeiteten Rahmenprofile ihrer Zugehörigkeit nach zusammengestellt werden.

Sofern dann die für einen Rahmen notwendigen Rahmenprofile alle angekommen sind, kann, wie an sich bekannt, mit dem Verschweißen der Rahmenprofile fortgefahren werden.

Es ist daher wesentliches Merkmal dieser Erfindung, daß die einzelnen Rahmenprofile unabhängig von ihrer Zusammenbau-Reihenfolge verschnittminimiert von meterlangen Profilstäben abgeschnitten werden und daß erst nach der Vorbearbeitung/Vormontage die für den Zusammenbau notwendige Reihenfolge hergestellt wird.

Es ist daher zunächst einmal der zusätzliche Aufwand nötig, jedem Rahmenprofil seine individuellen Daten aufzuprägen um sie kurze Zeit später wieder abzulesen. Die abgelesenen Daten werden einer Steuereinrichtung aufgegeben, welche die einzelnen Bearbeitungsvorgänge so koordiniert, daß alle Bearbeitungsvorgänge in kürzest möglicher Zeit ausgeführt werden.

Nach dieser Erfindung können die einzelnen Rahmenprofile entsprechend der auf ihnen angebrachten Strich-Codierung in vorübergehend ortsfestem Einspann-Zustand in der Bearbeitungsvorrichtung mit den entsprechend numerisch gesteuerten Bearbeitungswerkzeugen an den richtigen für ihren späteren Verwendungszweck vorgeschriebenen Stellen mit allen jeweils notwendigen Verschraubungen, Bohrungen oder auch aufzuschraubenden Schließteilen versehen werden. An eine bestimmte Aufeinanderfolge aller der zu einem Fensterrahmen gehörenden Rahmenprofile ist man dabei nicht gebunden. Das hat zur Folge, daß man bei der Ablängung der einzelnen Rahmenprofile die Zuschnittverluste minimieren kann.

Eine Rationalisierung des Verfahrens wird dadurch erreicht, daß mindestens zwei Bearbeitungswerkzeuge gleichzeitig ein Rahmenprofil bearbeiten, wobei eine Werkzeugkollision durch Zeitlichen und örtlichen Positionsvergleich ausgeschlossen wird. Der Positionsvergleich wird von einer dazu vorbestimmten Steuereinrichtung durchgeführt und in Positionsbefehle für die Werkzeuge der Bearbeitungsvorrichtung umgesetzt.

Sobald die Steuereinrichtung durch Positionsvergleich eine Kollisionsgefahr ergibt, wird dasjenige Bearbeitungswerkzeug aus der Kollisionszone herausgesteuert, welches den Bearbeitungsvorgang mit der größeren Positionstoleranz auszuführen hat. Die am Rahmenprofil durchzuführenden Bearbeitungen sind bezüglich der Positionen, an denen sie durchzuführen sind, nicht immer gleichwertig. Natürlich muß dafür gesorgt werden, daß ein Schließteil an der hierfür vorbestimmten Stelle angebracht wird, damit es mit einem Schließeingriffteil des Flügels ordnungsgemäß zusammenwirken kann. Demgegenüber sind andere Bearbeitungen hinsichtlich der Positionsgenauigkeit nachrangig, z.B. das Bohren von Dübellöchern.

Vorteilhaft wird das Verfahren so durchgeführt, daß an einem Rahmenprofil eines Blendrahmens flügelseitig durchzuführende Bearbeitungen mit Positionsvorrang gegenüber laibungsseitig durchzuführenden Bearbeitungen gesteuert werden. Die laibungsseitig durchzuführenden Bearbeitungen weisen in der Regel eine sehr große Positionstoleranz auf, weil es z.B. gleichgültig ist, ob ein Dübelloch für die-Befestigung des Blendrahmens an der Laibung etwas höher oder tiefer angeordnet ist, oder ob die Arretierverschraubung für die Verstärkungseinlage millimetergenau positioniert ist.

Es kann allerdings auch laibungsseitig zu Werkzeug- bzw. zu Positionskollisionen kommen. Für diesen Fall wird das Verfahren so durchgeführt, daß bei laibungsseitig durchzuführenden Bearbeitungen die für die Befestigung von Verstärkungseinlagen notwendige Schraubbearbeitung stets positionsnachrangig gegenüber allen anderen, auch flügelseitig durchzuführenden Bearbeitungen, gesteuert wird. Die Schraubstellen für die Befestigung von Verstärkungseinlagen sind vergleichsweise sehr beliebig. Sie müssen aus Festigkeitsgründen nur hinreichend gleichmäßig über die gesamte Länge des Rahmenprofils verteilt sein. Die Positionen von Befestigungsstellen des Rahmenprofils an der Laibung sind weniger beliebig, als die Positionen der Befestigungsstellen von Verstärkungseinlagen des Rahmenprofils.

Das Verfahren soll mit Bearbeitungs- und/oder Fehlerprotokollierung durchgeführt werden. Hierdurch erfolgt automatische Erfassung aller durchgeführten Bearbeitungen in zeitlicher Reihenfolge. Dies ermöglicht beispielsweise Qualitätsnachweise in Gewährleistungsfällen oder Qualitätssicherung. Bei der Fehlerprotokollierung werden beispielsweise Schrauberstillstände und/oder Bohrerbrüche u.dgl. erfaßt. Ein Schrauberstillstand kann beispielsweise dadurch erfaßt werden, daß eine Schraubzeitüberschreitung registriert wird. Fehlerprotokollierung kann zur Abschaltung der Vorrichtung führen oder zum automatischen Aussortieren des fehlerhaften Rahmenprofils.

Die Strich-Codierung hat den grundsätzlichen Vorteil, daß mit ihr alle Informationen in eine Steuereinrichtung der Bearbeitungsvorrichtung eingegeben werden können, welche die unterschiedlichen Ausgestaltungen der Rahmenprofile betreffen. Es ist daher möglich, der Bearbeitungsvorrichtung mit der Strich-Codierung Daten für einen insgesamt zeitoptimierten Bearbeitungsablauf aller an einem Rahmenprofil durchzuführenden Bearbeitungen übermittelt werden. Beispielsweise kann bei der Gefahr von Werkzeugkollision vorgegeben werden, daß die betreffenden kollisionsgefährdeten Bearbeitungen zeitlich nacheinander unter Vertauschung mit weiteren am Rahmenprofil vorzunehmenden Bearbeitungen durchgeführt werden.

Eine Verringerung der Bearbeitungszeit kann dadurch erreicht werden, daß eine Steuerung der Bearbeitungswerkzeuge in ihre Bearbeitungspositionen bereits ab Zuführung eines Rahmenprofils zur Bearbeitungsvorrichtung erfolgt, auch wenn das Rahmenprofil noch nicht in Ruhelage ist. Im Extremfall wird der Zeitpunkt der Zuführung eines Rahmenprofils zur Bearbeitungsvorrichtung dadurch bestimmt, daß die Bearbeitung des vorgehenden Rahmenprofils beendet wurde. Es kann dann praktisch Rahmenprofil an Rahmenprofil bearbeitet werden. Eine solche Steuerung ist insbesondere dann möglich, wenn die Steuerungsdaten mehrerer aufeinanderfolgender Rahmenprofile mittels Datenverarbeitung in die Steuereinrichtung der Bearbeitungsvorrichtung eingegeben werden, wobei die Ablesung der Strich-Codierung bereits außerhalb der Bearbeitungsvorrichtung erfolgte.

Der Aufwand zur Steuerung der Bearbeitung verringert sich, wenn die Steuerung der Bearbeitungswerkzeuge bereits mit erfolgtem Einlesen der Strich-Codierung einsetzt. Die Vorgänge bei zeitlich ungleichmäßig aufeinander erfolgenden Rahmenprofilen oder bei manuellen Eingriffen in die Abfolge unterschiedlicher Rahmenprofile können dann leichter beherrscht werden, weil keine Eingriffe in eine Datenübermittlung erfolgen müssen.

Vorteilhafterweise werden die Bearbeitungswerkzeuge nach der Bearbeitung eines Rahmenprofils zu einem vorbestimmten, vorzugsweise allen Werkzeugen gemeinsamen Nullpunkt bewegt, von dem aus die Bearbeitung des folgenden Rahmenprofils durchgeführt wird. Infolgedessen erfolgt vor jeder Bearbeitung eines Rahmenprofils eine Abstimmung aller Werkzeuge über den Nullpunkt, von dem aus gemessen wird, um die von den Bearbeitungswerkzeugen zurückzulegenden Distanzen zu erreichen. Auf diese Weise werden Toleranzen optimal ausgeschaltet, Fehleradditionen vermieden.

Das Verfahren kann auch dadurch rationalisiert werden, daß die Steuerung der Bearbeitungswerkzeuge bereits während der Zeit für eine Genaupositionierung einer Verstärkungseinlage innerhalb eines Rahmenprofils erfolgt. Eine Genaupositionierung ist erforderlich, um die in das Innere der Rahmenprofile eingeschobene Verstärkungseinlagen so zu positionieren, daß sie beim späteren Verschweißen der Rahmenprofilenden nicht stören und innerhalb des Rahmenprofils diejenige Lage einnehmen, in der sie eine gleichmäßige Verstärkung über die gesamte Länge des Profils bewirken.

Für die Genaupositionierung der im Rahmenprofil vorhandenen Verstärkungseinlage kann am Auslauf des Förderbandes, vorteilhafterweise an einem längsverstellbaren Anschlag für das Rahmenprofil ein in dessen offenes Ende einfahrbarer, hubverstellbarer Positionierkolben vorgesehen sein.

Die Genaupositionierung der Verstärkungseinlage im Rahmenprofil ist erforderlich, weil die Verstärkungseinlagen lediglich in bestimmten Längenstufen vorliegen, während die einzelnen Rahmenprofile millimetergenau abgelängt sind. Es ist daher zur Erzielung optimaler Verstärkungseigenschaften eine mittige Zentrierung der Verstärkungseinlagen in den Rahmenprofilen notwendig. Hierzu dient der Positionierkolben. Der Positionierkolben wird allerdings erst dann positionierend gesteuert, wenn die Gesamtlänge des gerade bearbeiteten Rahmenprofils feststeht.

Zur Feststellung der Gesamtlänge können optische Meßeinrichtungen vorgesehen sein, eine andere Möglichkeit wäre eine in der Strich-Codierung verschlüsselte Längenangabe.

Zur Durchführung des vorbeschriebenen Verfahrens dient eine Vorrichtung mit den Merkmalen des Anspruchs 13.

Durch die durchweg von der individuellen Codierung jedes einzelnen Rahmenprofils numerisch gesteuerten Bearbeitungswerkzeuge kann das während der Bearbeitung ortsunveränderlich im Bearbeitungsautomaten eingespannte Rahmenprofil bis in alle Einzelheiten exakt vormontiert bzw. vorbearbeitet werden, wobei diese Arbeiten sowohl von der Ober- als auch von der Unterseite des liegenden Rahmenprofils vorgenommen werden können. Für die Einspannung sorgen am Bearbeitungsautomaten oberhalb und seitlich des Rahmenprofil-Förderbandes angeordnete Niederhalter und Spannelemente. Wesentliches Merkmal des Bearbeitungsautomaten ist die freie Zugänglichkeit der Laibungsseite und der Falzluftseite bei Blendrahmenprofilen bzw. der Falzluftseite und der Glasfalzseite bei Flügelrahmenprofilen.

Es hat sich gezeigt, daß aufrechtstehende Rahmenprofile zu bevorzugen sind, weil auf diese Weise jegliche Beschädigung der sichtbaren Rahmenseiten ausgeschlossen ist und insbesondere die Rahmenprofile auch sehr kippsicher auf ihrer breiten Unterseite aufliegen.

Um bei derartiger Ausgangslage die Rahmenprofile sowohl von unten als auch von oben bearbeiten zu können, sind im Bearbeitungsautomaten jeweils zwei endlos umlaufende Förderriemen vorgesehen, die parallel zueinander liegen und die mit ihren sich zugewandten Riementrumen zwischen sich einen Spalt freilassen. In diesem Spalt kann das Bearbeitungswerkzeug des Unterschlittens frei längsverfahren werden, ohne in Kontakt mit den Fördertrumen der Förderbänder zu geraten. Die hochkantstehenden Förderbänder werden stets gemeinsam in Bewegung gesetzt oder gestoppt. Am Ende der beiden Förderbänder ist ein in den Weg des Rahmenprofils fahrender Endanschlag vorgesehen, um dem Rahmenprofil eine millimetergenaue Bearbeitungsposition zu geben.

Ober- und unterhalb der beiden durchlaufenden Förderbänder sind zwei sich parallel dazu erstreckende Führungsschienen vorgesehen, an denen die darauf verschieblichen Schlitten sitzen, welche die Bearbeitungswerkzeuge tragen.

Mit einfachen Mitteln können sogar sicherheitstechnische Aspekte des einzelnen Rahmenprofils im späteren Fensterrahmen berücksichtigt werden. Hierzu wird vorgeschlagen, daß die in die Metallverstärkungseinlage des Rahmenprofils einzudrehenden Schrauben für das rahmenseitige Sicherheitsschließteil gegensinnig schräg zur Oberfläche des Sicherheitsschließteils eingedreht werden. Zu diesem Zweck sind entsprechend ausgerichtete Schraubenkanäle sowie entsprechend schräg ausgerichtete eindrehende automatische Schraubwerkzeuge vorgesehen. Das schräge Einschrauben läßt erhöhte Auszugkräfte zu, so daß die Schrauben nur erschwert gewaltsam herausgezogen werden können. Das ist beispielsweise von Bedeutung, wenn das Sicherheitsschließteil am Blendrahmen von dem Gegenstück am Flügelrahmen formschlüssig hintergriffen ist und wenn es deshalb auf die Sicherung des Formschlußeingriffs durch ein möglichst fest am Rahmenprofil verankertes Sicherheitsschließteil ankommt. Bei einer solchen Vorrichtung wird die aus Platzgründen im Bearbeitungswerkzeug gebotene Schräganordnung der Schraubenkanäle dazu benutzt, einen sicherheitstechnischen Vorteil zu erreichen.

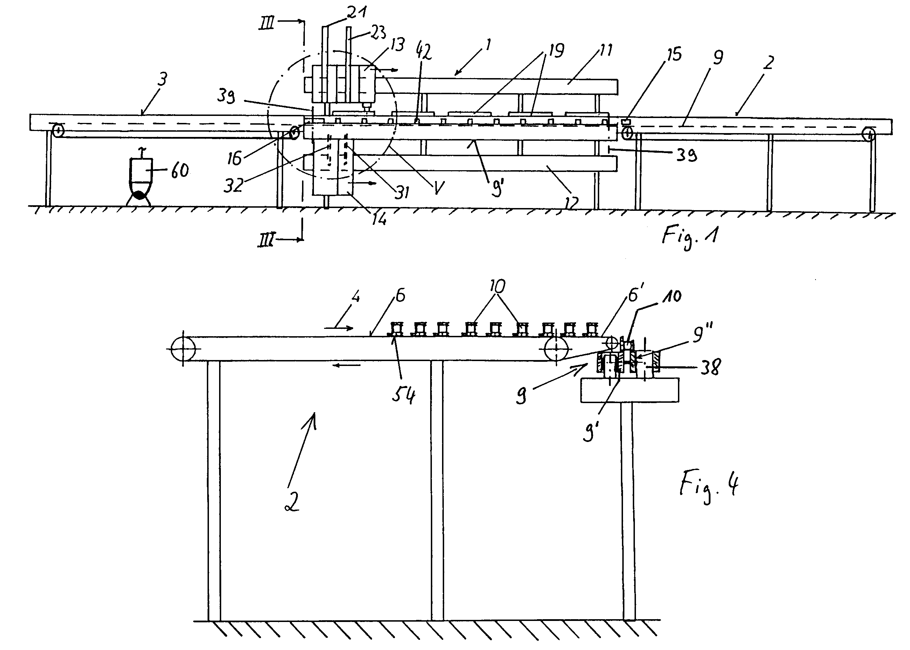

Im folgenden wird die Erfindung anhand von Ausführungsbeispielen näher erläutert. Es zeigen
- Fig.1: die Bearbeitungsvorrichtung in der Seitenansicht und
- Fig.2: in der zugehörigen Draufsicht,
- Fig.3: eine Schnittansicht nach der Linie III-III der Fig.1,
- Fig.4: einen Schnitt nach der Linie IV-IV der Fig.2,
- Fig.5: den in Fig.1 strichpunktiert umrandeten Bereich V,
- Fig.6: den in Fig.3 strichpunktiert umrandeten Bereich VI,
- Fig.7: eine der Fig.6 entsprechende Bereichsansicht mit in Spannstellung befindlichen Spannelementen,
- Fig.8: eine in Pfeilrichtung VIII der Fig.7 liegende Ansicht in vergrößerter Darstellung,
- Fig.9: eine Aufsicht auf ein an einem Rahmenprofil befestigten Sicherheitsschließteil,
- Fig.10: den Schnitt A-A der Fig.9,
- Fig.11: den Schnitt B-B der Fig.9 einschließlich einer schematischen Darstellung eines Bearbeitungswerkzeugs, und
- Fig.12: das Bearbeitungszentrum mitsamt seiner Steuerung.

Sofern im folgenden nichts anderes gesagt ist, gilt die Beschreibung stets für alle Figuren.

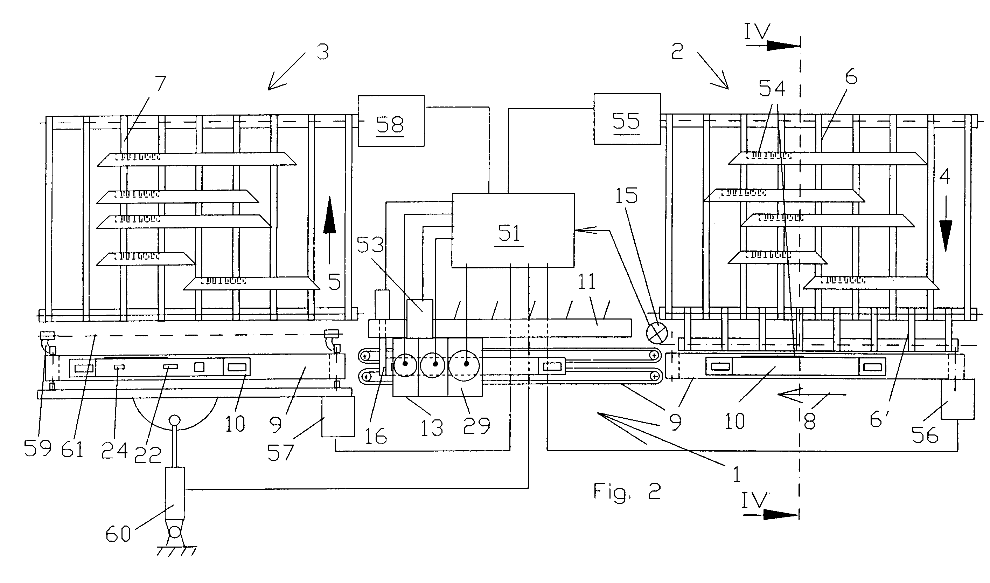

Die schematisch dargestellte Vorrichtung besitzt einen Bearbeitungsautomaten 1, der zwischen der Transporteinrichtung 2 für die Zufuhr und der Transporteinrichtung 3 für die Abfuhr der Rahmenprofile dient. Jede dieser Transporteinrichtungen 2 und 3 weist entsprechend den eingezeichneten Pfeilrichtungen 4 und 5 (siehe Fig.2) im Obertrum umlaufende Transportbänder 6,7 auf. Parallel zu den Transportbändern 6 und in Förderrichtung nachfolgend liegen die Transportbänder 6'. Diese haben die Aufgabe, die auf das Transportband 6 quer aufgelegten und bereits vorher mit passenden stählernen Verstärkungseinlagen versehenen Rahmenprofile vereinzelt auf das Obertrum des Förderbandes 9 abzukippen, wo die Rahmenprofile dann in Zuführrichtung 8 weiter gefördert werden, um zum Bearbeitungsautomaten 1 zu gelangen. Die Förderbänder 9 durchlaufen den Bearbeitungsautomaten 1 in dessen Längsrichtung. An der Förderung beteiligt sind zwei mit Abstand nebeneinander liegende Fördertrume 9',9''. Diese beiden Fördertrume laufen gleichgerichtet in Förderrichtung. Auf ihnen liegt das Rahmenprofil 10 auf. Zwischen sich lassen die beiden Fördertrume 9',9'' einen hinreichend breiten Zwischenraum frei, um das Rahmenprofil 10 von unten bearbeiten zu können. Beide Fördertrume 9',9'' werden jeweils gleichzeitig in Bewegung gesetzt bzw. gestoppt. Diese Steuerung wird über die Steuereinrichtung 51 wahrgenommen. Die Steuereinrichtung 51 steuert hierzu die Motoren 40, von denen jeder eines der beiden umlaufenden Förderbänder treibt.

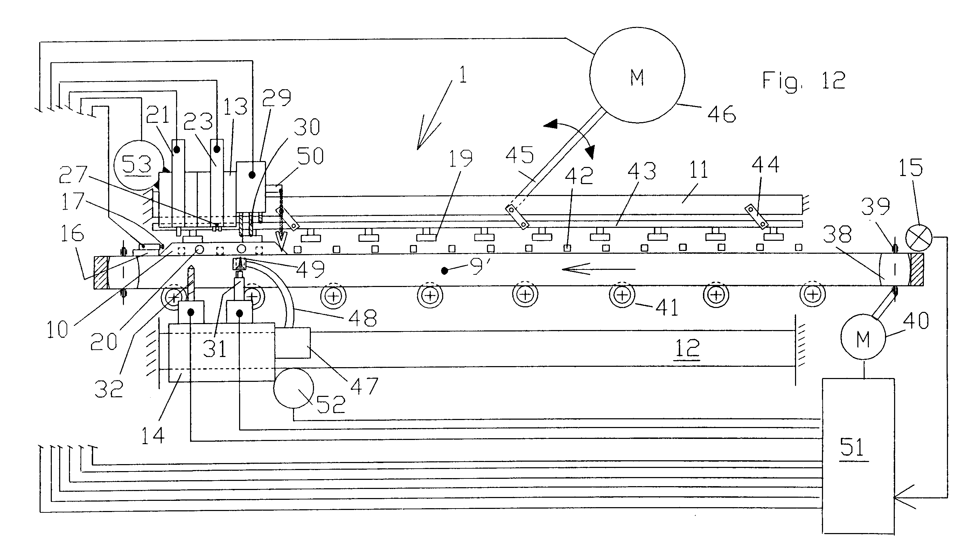

Wie insbesondere Fig.12 zeigt, werden die Unterkanten der vertikalen Fördergurte von ortsfesten Stützrollen 41 abgestützt. Im Normalfall laufen die Stützrollen 41 nicht mit. Allerdings muß das Rahmenprofil 10 von den Niederhaltern 19 gegen die Oberkanten der aufrecht stehenden Fördergurte 9', 9'' gedrückt werden. Um diesem Druck entgegenzuwirken, dienen die Stützrollen 41. Die Stützrollen sind so angeordnet, daß dennoch der Raum zwischen den gleichlaufenden mittigen Riementrumen 9',9'' freibleibt. Das Werkstück ist daher mittig sowohl von oben als auch von unten frei zugänglich für die entsprechenden Bearbeitungswerkzeuge des Bearbeitungsautomaten 1.

Ober- und unterhalb der Förderbänder 9 sind parallel zu den Förderbändern 9 verlaufende Führungsschienen 11,12 vorgesehen, an denen die verschieblich angeordneten Schlitten, nämlich der Oberschlitten 13 und der Unterschlitten 14 geführt sind. Auf diesen Schlitten sitzen die Montage- bzw. Bearbeitungswerkzeuge, die noch näher beschrieben werden. Am Einlauf der Förderbänder 9 ist ein Scanner 15 angeordnet, der die Information des Strich-Codes 54 aufnimmt und einer Steuereinrichtung 51 zuführt, welche die gesamte Steuerung des Bearbeitungsautomaten übernimmt. Die Steuerung erfolgt numerisch. Am Auslauf der Förderbänder 9 des Bearbeitungsautomaten 1 sind ein quer zur Fördereinrichtung bis in den Weg des Rahmenprofils verstellbarer Anschlag 16 für das zu bearbeitende Rahmenprofil 10 sowie weiterhin ein in dessen dem Anschlag 16 zugewandtes Ende einfahrbarer, hubverstellbarer Positionierkolben 17 vorhanden.

Der Positionierkolben 17 hat die Funktion, die eingeschobene Verstärkungseinlage 18 bis in die Mitte des Rahmenprofils 10 zu verschieben, so daß beidendig des Rahmenprofils 10 lediglich noch kurze Längsbereiche verbleiben, die nicht von der Verstärkungseinlage 18 durchsetzt werden.

Im vorliegenden Fall wird die Länge des Verstärkungsprofils 10 über das Auge 50 festgestellt, welches mit dem Oberschlitten 13 in Längsrichtung des Rahmenprofils 10 so lange verfahren wird, bis das ausgesendete Signal das Ende des Rahmenprofils 10 anzeigt.

Da die Länge der Verstärkungseinlage in vorbekannten Stufungen vorliegt, läßt sich nun aus der gemessenen Länge des Rahmenprofils 10 über entsprechende Differenzbildung und Halbierung des errechneten Wertes derjenige Weg vorgeben, den der Positionierkolben 17 zurückzulegen hat. Der Positionierkolben 17 legt dabei denjenigen Weg zurück, der erforderlich wäre um die Verstärkungseinlage 18 mittig im Rahmenprofil 10 zu zentrieren.

Der Bearbeitungsautomat 1 ist mit mehreren in Abständen voneinander angeordneten, oberhalb der Förderbänder 9 angeordneten Niederhaltern 19 und seitlich der Förderbänder 9 angeordneten Spannelementen 20 versehen, die das zu bearbeitende Rahmenprofil 10 in seiner am Anschlag 16 anliegenden Position horizontal und vertikal fest einspannen. Dabei wird das horizontale Widerlager von den Horizontalanschlägen 42 und das vertikale Widerlager von den Stützrollen 41 gebildet.

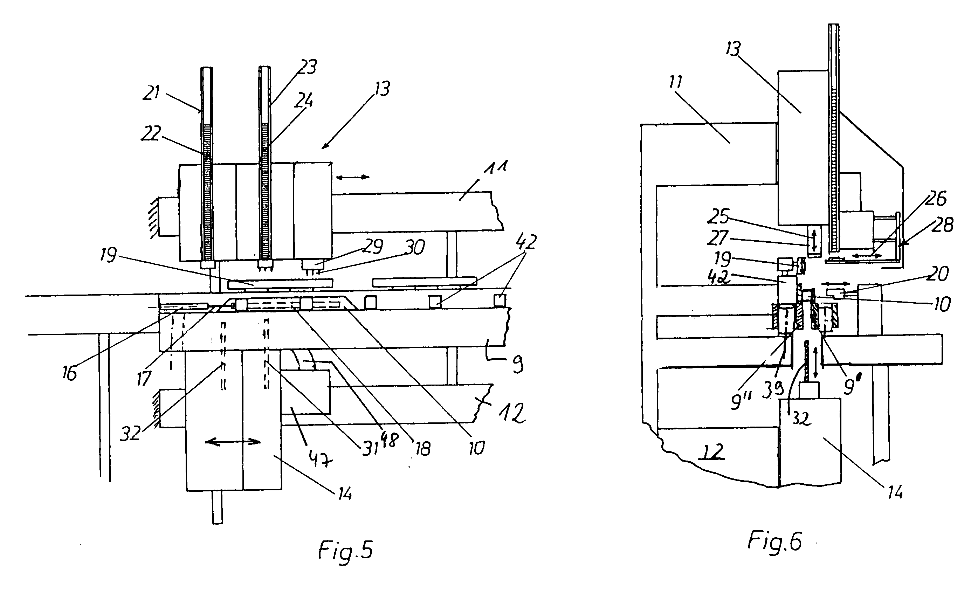

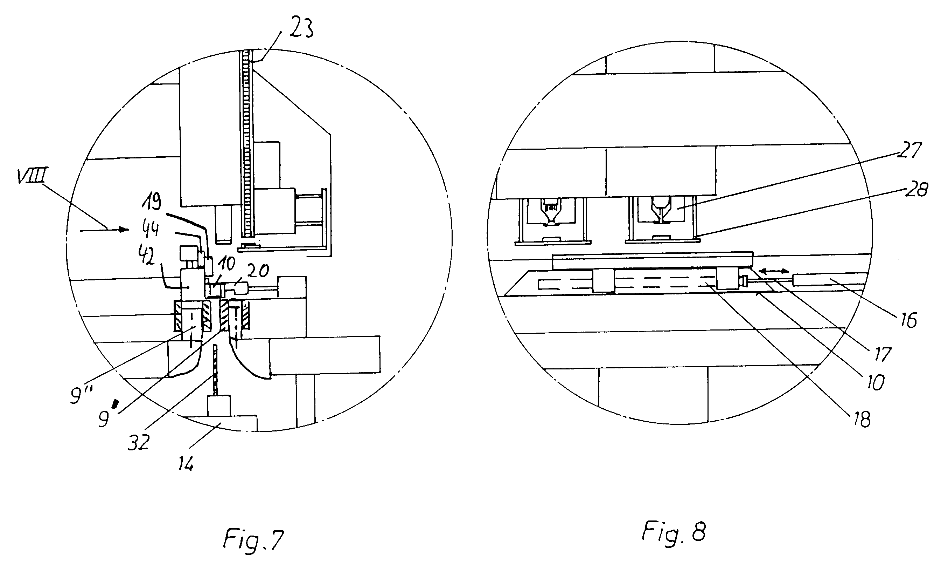

Zu den Bearbeitungswerkzeugen im einzelnen: Am Oberschlitten 13 sitzt das Magazin 21 für die Speicherung und die Einzelabgabe zur Einzelverschraubung von Rollenschließteilen 22 die lediglich im Kunststoff des Rahmenprofils 10 befestigt werden. Weiterhin sitzt am Oberschlitten 13 das Magazin 23 für die Speicherung und Einzelabgabe zur Einzelverschraubung der Sicherheitsschließteile 24. Während zum Verschrauben der Rollenschließteile 22 im Kunststoff des Rahmenprofils 10 lediglich Einfachschrauben notwendig sind, erfordert die Verschraubung der Sicherheitsschließteile 24 jeweils drei Schrauben, von denen zwei in die Metallverstärkungseinlage 18 und die dritte Schraube lediglich in den Kunststoff des Rahmenprofils 10 einzudrehen sind. Für die Einzelabgabe sowohl der Rollenschließteile 22 als auch der Sicherheitsschließteile 24 sind entsprechend den Fig.6 bis 8 an den unteren Enden der Magazine 21 bzw. 23 jeweils quer zu den unteren Magazinenden (Doppelpfeilrichtung 25 bzw. 26) bewegbare Schließteilaufnehmer mit Schraubeinheiten 27 bzw. die Schließteilzuführungen 28 vorgesehen.

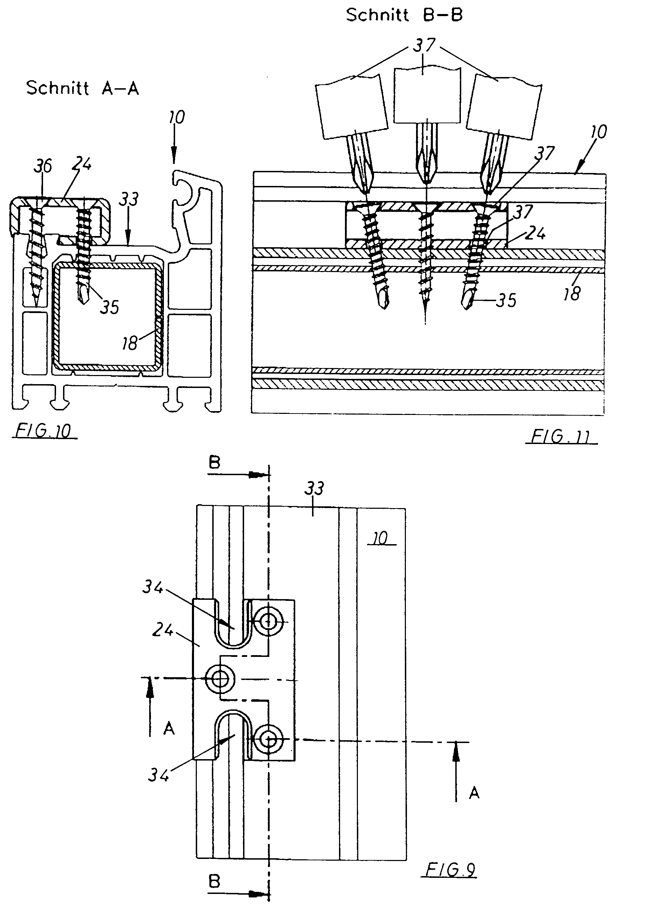

Fig.9 zeigt eine Aufsicht auf einen Abschnitt eines Rahmenprofils 10, das gemäß Fig.10,11 mit einer metallischen Verstärkungseinlage 18 versehen ist. An diesem Rahmenprofil 10 ist ein Sicherheitsschließteil 24 mit Verschraubung auf der flügelseitigen Rahmenfläche 33 befestigt. Das Sicherheitsschließteil hat zwei sich gegenüberliegende Eingriffsschlitze 34, in die pilzkopfartige Verriegelungselemente des Flügels mit einem Treibstangenbeschlag eingefahren werden können. Mit der Pilzkopfform erfolgt ein Hintergreifen des Sicherheitsschließteils 24 im Bereich der Schlitzränder, so daß ein Trennen von Flügel und Blendrahmen vertikal zur Darstellungsebene der Fig.9 verhindert wird. Voraussetzung hierfür ist die bereits oben angesprochene sichere Befestigung des Sicherheitsschließteils am Rahmenprofil 10 durch zwei Schrauben 35, die als selbstschneidende Schrauben ausgebildet sind und die in die metallische Verstärkungseinlage 18 selbstschneidend eingreifen. Die Befestigungsschraube 36 ist die oben angesprochene dritte Schraube. Sie hat die Funktion, das Sicherheitsschließteil 24 möglichst genau parallel am Rahmenprofil 10 zu halten. Dies wird durch die 3-Punkt Befestigung des Sicherheitsschließteils 24 erreicht.

Fig.11 zeigt, daß die Schrauben 35,36 mit, numerisch gesteuerten Schraubwerkzeugen 37 eingeschraubt werden. Diese Schraubwerkzeuge 37 sind mit unterschiedlichen Neigungen zur Profiloberseite angeordnet, wobei die Neigungsrichtung jedes Schraubwerkzeugs mit der Längsrichtung der zugehörigen Schraube 36 fluchtet. Während das mittlere Schraubwerkzeug 37 vertikal angeordnet ist, sind die peripheren Schraubwerkzeuge 37 gegen das mittlere Werkzeug jeweils etwas nach außen geneigt. Auf diese Weise wird ein jeweils spitzer Winkel zur Vertikalen gebildet, wobei die beiden Winkel gegensinnig schräg zur Oberfläche 33 des Rahmenprofils 10 geneigt sind. Dementsprechend schräg sind auch die Löcher 37 im Sicherheitsschließteil 24 für das Durchstecken und das Führen einer Schraube 35 beim Einschrauben. Beide Sicherheitsschrauben 35 werden daher entsprechend gegensinnig schräg eingeschraubt. Das schräge Einschrauben der Schrauben 35 hat nicht nur den Vorteil, daß das Sicherheitsschließteil fester mit dem Rahmenprofil 10 verbunden ist, sondern es ermöglicht auch, daß sich die Schraubwerkzeuge infolge ihrer radialen Ausdehnung nicht behindern. Daher können die Schrauben zugleich eingeschraubt werden.

Am Oberschlitten 13 ist noch ein Mehrspindelbohrkopf 29 vorhanden, der hier drei benachbart zueinander angeordnete Bohrer 30 aufweist. Die Bohrer 30 dienen zum Erzeugen von im Rahmenprofil ggf. vorzusehenden Kämpferpositionsbohrungen. Im vorliegenden Fall ist der Abstand dieser Bohrer 30 auf zwei verschiedene Kämpferverbinder abgestimmt.

Wie insbesondere Fig.12 hierzu zeigt, sind zwei benachbarte Bohrer gleich lang und gegenüber dem dritten Bohrer erheblich länger.

Die Differenz der Bohrerlängen ist so bemessen, daß die erreichbare Bohrtiefe für die beiden gleichlangen Bohrer einerseits ausreicht, um die Löcher für entsprechend schmale Kämpferverbinder zu bohren, andererseits der dritte kurze Bohrer aber noch nicht in das Rahmenprofil eindringt.

Werden dagegen breite Kämpfer angebracht, müssen die Kämpferbohrungen auch entsprechend weit voneinander entfernt sein. Dieser Abstand entspricht dem Abstand zwischen dem äußeren langen Bohrer und dem kurzen Bohrer. Dabei stört das zusätzlich gebohrte mittlere Loch keinesfalls, weil es durch den Kämpferverbinder verdeckt wird, wenn dieser mit den beiden außen angebrachten Bohrungen befestigt wird.

An dem Unterschlitten 14 ist ein Arretierschrauber 31 vorgesehen, der mit einem Arretierschrauben-Magazin 47 zusammenwirkt. Die Arretierschrauben dienen dem Festschrauben der an ordnungsgemäßer Längsposition im Rahmenprofil 10 positionierten Verstärkungseinlage 18. Durch die Arretierschrauben wird die Verstärkungseinlage 18 axial gesichert. Ferner ist noch ein Dübellochbohrer 32 vorgesehen, durch den die zur späteren Verdübelung im Mauerwerk dienenden Durchgangsbohrungen im Rahmenprofil erzeugt werden.

Weiterhin zeigt Fig.2, daß auf die Parallelgurte der Zufuhrtransporteinrichtung 2 willkürlich aufgelegte Rahmenprofile 10 mit der angebrachten Strich-Codierung 54 nach unten auf ihre Bearbeitung warten. Die gezeigten Rahmenprofile haben auf ihrer Unterseite ggf. eine Schutzfolie um Beschädigung wahrend des Transports zu vermeiden. Die Zufuhrtransporteinrichtung 2 wird über den Querfördermotor 55 in Bewegung gesetzt, um eines der aufgelegten Rahmenprofile 10 in Richtung zu dem Kippförderer 6' zu fördern. Der Kippförderer dreht das nächste ankommende Rahmenprofil um 90° und legt es mit der Unterseite auf den Fördergurt 9, der vom Längsfördermotor 56 in Zufuhrrichtung 8 angetrieben wird. Dabei gelangt die Strich-Codierung 54 in den Sichtbereich des Scanners 15, der die erforderlichen Daten aufnimmt und an die Steuereinrichtung 51 übermittelt. Während der Förderung läuft das Kunststoff-Rahmenprofil 10 auf die beiden parallel geführten Hochkantgurte des Bearbeitungsautomaten 1 wo der Anschlag 16 bereits ausgefahren ist, um das ankommende Rahmenprofil 10 anzuhalten. Nachdem die Bearbeitungsschritte durchgeführt worden sind, steuert die Steuereinrichtung 51 den Längsfördermotor 57 der Abfuhrtransporteinrichtung 3 an, so daß die Doppelgurte des Bearbeitungszentrums 1 das soeben bearbeitete Rahmenprofil 10 dorthin übergeben können. Nachdem das Rahmenprofil 10 vor die Abfuhrtransporteinrichtung 3 gefahren worden ist, stoppt der Längsfördermotor 57 und das Rahmenprofil 10 kann auf die Quergurte 7 gebracht werden. Hierzu ist eine Schwenkeinrichtung vorgesehen, welche über die Schwenkgelenke 59 und den Schwenkzylinder 60 in Richtung zu- der Abtransporteinrichtung gekippt werden kann. Dabei wird um die Schwenkachse 61 der gesamte Bandapparat zusammen mit dem Längsfördermotor 57 soweit gekippt, bis das aufgelegte Rahmenprofil 10 auf die Gurte 7 fällt. Danach kann über den Querfördermotor 58 die Abtransporteinrichtung aktiviert werden und die Bearbeitung fortgeführt werden.

Weitere Details zeigt Fig.12: Ergänzend zum bisher gesagten wird jeder Parallelgurt im Bereich des Bearbeitungsautomaten 1 durch endseitige Umlenkrollen 38 geführt, deren Rollenachsen 39 vertikal stehen. Oberhalb-der oberen Gurtkante sind Horizontalanschläge 42 vorgesehen, gegen welche das Rahmenprofil 10 mittels der Spannelemente 20 gepreßt wird. Um darüber hinaus das Rahmenprofil auch gegen die Kraft des Dübellochbohrers 32 bzw. Arretierschraubers 31 festzuhalten, sind eine Vielzahl von Niederhaltern 19 längs des Bearbeitungsautomaten 1 angeordnet. Die Niederhalter 19 sitzen an einer Parallelschiene 43, die über die Lenker 44 ortsfest beweglich ist. Die Parallelschiene 43 kann mittels Antriebswelle 45 und Schwingenmotor 46 in eine untere Klemmstellung sowie obere Freigabestellung verfahren werden. In der unteren Klemmstellung wird das hochkantstehende Rahmenprofil 10 gegen die Gurtoberkante gedrückt. Gegenüberliegend stützt sich der Gurt dann auf den Stützrollen 41 ab. Die Steuerung des Schwingenmotors 46 erfolgt durch die Steuereinrichtung 51. Ferner sitzt am Unterschlitten 14 ein Schraubenmagazin 47, welches über einen seitlich herausgeführten Magazingurt 48 einzelne Schrauben bis zum Schraubenhalter 49 heraustreibt. Dort im Schraubenhalter wird die Schraube so fixiert, daß der Arretierschrauber 31 vertikal herausgefahren werden kann und dabei die Schraube in das oberhalb liegende Rahmenprofil 10 eindreht. Dabei wird die innerhalb des Rahmenprofils 10 liegende Verstärkungseinlage 18 axial gesichert.

Zum Verfahren des Oberschlittens 13 ist ein Positioniermotor 53 vorgesehen, der ebenfalls über die Steuereinrichtung 51 angesteuert wird. In entsprechender Weise wird der Unterschlitten 14 von dem Positioniermotor 52 entsprechend der Steuerung durch die Steuereinrichtung 51 verfahren.

Ferner ist die Steuereinrichtung 51 mit allen zu steuernden Geräten, insbesondere dem Mehrspindelkopf 29 sowie den Magazinen 21 und 23 verbunden. Das gleiche gilt für den Motorantrieb, für den Dübellochbohrer 32 sowie -den Arretierschrauber 31 und den Fördermotor 40.

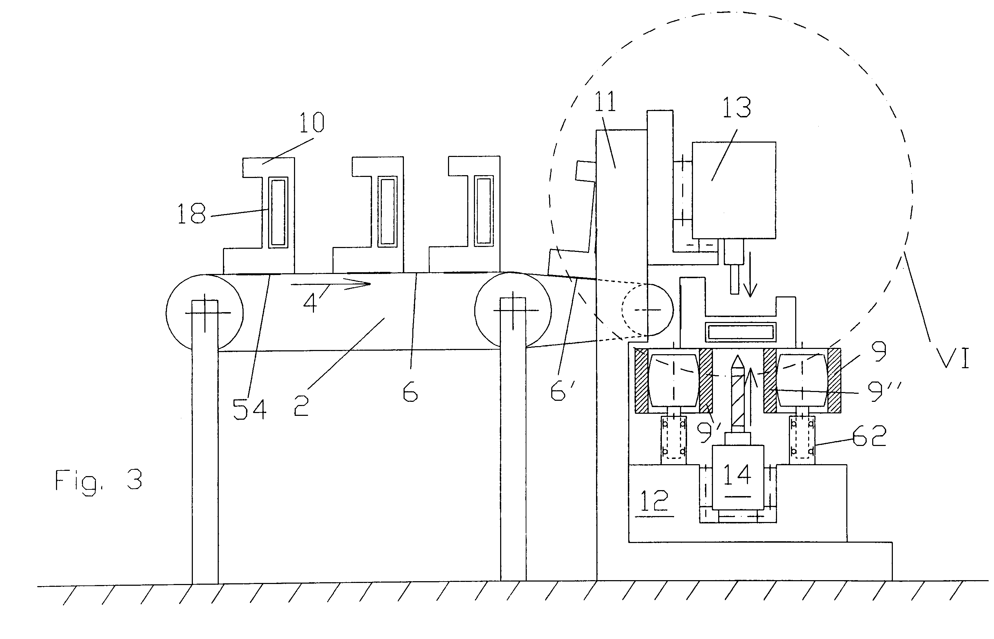

Zur Funktion: Die Rahmenprofile 10 fallen in unterschiedlichen Längen an. Sie müssen vor dem Zusammenbau der Rahmen vormontiert bzw. vorbearbeitet werden. Entsprechend ihrem späteren Einbau- bzw. Verwendungszweck werden sie einzeln mit einer entsprechenden Strich-Codierung versehen, welche alle notwendigen Daten enthält. Nach dem Einschieben der längenmäßig passenden Stahlverstärkungseinlagen 18 werden die einzelnen Fensterrahmenprofile 10 auf die Transportbänder 6 der Zufuhrtransporteinrichtung 2 gelegt. Die entsprechende Auflagefläche der Profile kann vorher noch durch eine Folie gegen Beschädigungen geschützt worden sein. Dabei liegt das Etikett mit der Strich-Codierung 54 unten. Die Zufuhrfördereinrichtung ist im Ruhestand. Auf den Gurten liegt eine Vielzahl einzelner Rahmenprofile. Der Querfördermotor 55 wird angesteuert und fördert alle Rahmenprofile in Richtung zur Abkippvorrichtung 6'. Dort wird das zunächst ankommende Rahmenprofil aus der gezeigten Lage um 90° gedreht (siehe auch Fig.3) und liegt dann mit der Laibungsseite auf dem folgenden Fördergurt 9.

Wesentlich ist hier, daß der Querfördermotor 55 nur solange läuft, bis ein einziges Rahmenprofil um 90° gekippt worden ist und dann dem Bearbeitungsautomaten 1 zugeführt werden soll. Der Querfördermotor 55 wird gestoppt und der Längsfördermotor 56 kann anlaufen, sofern noch nicht geschehen. Dabei streicht die nunmehr zugängliche Strich-Codierung 54 am Scanner 15 vorbei, während das Rahmenprofil 10 zum Bearbeitungsautomaten 1 fährt. Beim Einlauf des auf dem zweiten Förderband 9 lediglich an seinen beiden Längsseiten aufliegenden Rahmenprofils 10 in den Bearbeitungsautomaten 1 erfolgt über den Scanner 15 die Profilerkennung über die auf dem Profil vorhandene Codierung. Die vom Scanner aufgenommenen Daten werden der Steuereinrichtung 51 zugeführt, wodurch die Steuerung der einzelnen Aggregate und dadurch letztlich die numerische Steuerung der im Automaten 1 vorhandenen Bearbeitungswerkzeuge beginnen kann. Diese beginnen ihre Arbeit aber erst, nachdem das zu bearbeitende Rahmenprofil gegen den Anschlag 16 gefahren ist. In dieser Position wird das Rahmenprofil 10 durch die zweckmäßig gummibehafteten Niederhalter 19 bzw. Spannelemente 20 von oben und seitlich fest eingespannt. Danach wird durch den hubverstellbaren Positionierkolben 17 zunächst die Verstärkungseinlage 18 in ihre ordnungsgemäße Einbauposition verschoben. Nach der Positionierung wird die Verstärkungseinlage 18 über die von unten eingedrehte Arretierschraube 31 auch axial gesichert bzw. festgelegt. Sodann kann der Dübelbohrer 32 von unten die Dübellöcher in das Rahmenprofil bohren. Die dabei anfallenden Bohrspäne fallen nach unten, beeinträchtigen also das Rahmenprofil nicht. Danach wird ein Rollenschließteil 22 an entsprechender Stelle im Rahmenprofil 10 positioniert und verschraubt. Dies erfolgt mittels der am Oberschlitten 13 gelegenen Magazin- und Schraubeinrichtung. Auf dieselbe Weise werden die im Magazin 23 gespeicherten Sicherheitsschließteile 24 einzeln an die richtige Stelle am Fensterrahmenprofil 10 gebracht und dort mittels dreier Schrauben verschraubt. Eine der Schrauben geht in Kunststoff und die beiden anderen in die stählerne Verstärkungseinlage. Über den Mehrspindelkopf 29 am Oberschlitten 13 können, sofern die Strich-Codierung eine entsprechende Information enthält, die notwendigen Kämpferpositionsbohrungen im Rahmenprofil 10 gebohrt werden. Nach Durchführung dieser jeweils numerisch gesteuerten Bearbeitungsvorgänge werden der am Förderbandauslauf des Bearbeitungsautomaten 1 angeordnete Anschlag 16 sowie der hubverstellbare Positionierkolben 17 aus der Förderbahn des Rahmenprofils herausgefahren. Danach laufen die Förderbänder an und das soeben bearbeitete Rahmenprofil wird über das Förderband 9 zu den Abfuhrtransportbändern 7 gefördert. Dort wird es über eine Kippeinrichtung auf die Abfuhrtransportbänder 7 gekippt.

Ergänzend hierzu zeigt Fig.3 noch Details der beiden Fördergurte 9, deren Förderrollen von der Unterseite her fliegend gelagert sind (62).

Dies bietet den Vorteil, daß die Gurtoberseiten ungehindert frei zugänglich sind.

Bildet man die hochkant stehenden Gurte im Bearbeitungsautomaten als Zahnriemen mit Mittelsteg aus, wird eine Riemenzentrierung ggf. auch ohne Stützrollen 41 erreicht.

Eine individualisierende Profilkennzeichnung, wie die Strich-Codierung 54, läßt sich auch von einem Zentralrechner an den Bearbeitungsautomaten übermitteln, sofern eine vorgegebene Reihenfolge nicht mehr geändert werden muß.

### Bezugszeichenaufstellung:

- 1: Bearbeitungsautomat
- 2: Transporteinrichtung, Zufuhr
- 3: Transporteinrichtung, Abfuhr
- 4: Laufrichtung Obertrum
- 5: Laufrichtung Obertrum
- 6: Zufuhrtransportband
- 6': nachfolgendes Transportband, Kippvorrichtung
- 7: Abfuhrtransportband
- 8: Zuführrichtung
- 9: Förderband
- 9': Fördertrum
- 9'': Fördertrum
- 10: Kunststoff-Rahmenprofil
- 11: Führungsschiene
- 12: Führungsschiene
- 13: Oberschlitten
- 14: Unterschlitten
- 15: Scanner
- 16: Anschlag
- 17: Positionierkolben
- 18: Verstärkungseinlage
- 19: Niederhalter
- 20: Spannelement
- 21: Magazin
- 22: Rollenschließteil
- 23: Magazin
- 24: Sicherheitsschließteil
- 25,26: Doppelpfeilrichtung
- 27: Schraubeinheit
- 28: Schließteilzuführung
- 29: Mehrspindelkopf
- 30: Bohrer
- 31: Arretierschrauber
- 32: Dübellochbohrer
- 33: Rahmenfläche
- 34: Eingriffschlitz
- 35: Schraube
- 36: Befestigungsschraube
- 37: Bearbeitungswerkzeug
- 38: Umlenkrolle
- 39: Rollenachse
- 40: Motor
- 41: Stützrolle
- 42: Horizontalanschlag
- 43: Parallelschwinge
- 44: Lenker
- 45: Antriebswelle
- 46: Schwingenmotor
- 47: Schraubenmagazin
- 48: Magazingurt
- 49: Schraubenhalter
- 50: Auge
- 51: Steuereinrichtung
- 52: Positioniermotor, Unterschlitten
- 53: Positioniermotor, Oberschlitten
- 54: Strich-Codierung
- 55: Querfördermotor
- 56: Längsfördermotor
- 57: Längsfördermotor
- 58: Querfördermotor
- 59: Schwenkgelenk
- 60: Schwenkzylinder
- 61: Schwenkachse
- 62: Fliegendlagerung

## Patentansprüche

1. Verfahren zum Vormontieren und -bearbeiten von Rahmenprofilen, die für den Zusammenbau von Fenster- oder Türrahmen bestimmt sind, und mit insbesondere metallischen Verstärkungseinlagen versehen werden, insbesondere derartigen aus Kunststoff bestehenden Rahmenprofilen mittels einer mit Bearbeitungswerkzeugen (30,31,32) versehenen Bearbeitungsvorrichtung (1), bei welcher die Bearbeitungswerkzeuge durch eine Steuereinrichtung (51) zeitlich und örtlich koordiniert so gesteuert werden, daß dabei die Rahmenprofile (10) in vorübergehend ortsfester Einspannlage liegend mit eingeschobenen und längenmäßig passenden Verstärkungseinlagen (18) unterschiedlich bearbeitet werden, wobei die Bearbeitung durch Bearbeitungswerkzeuge erfolgt, die in Längsrichtung der Rahmenprofile und quer dazu örtlich und seitlich entsprechend verstellt werden, **dadurch gekenneichnet**, daß
1.0 unabhängig von der für den Zusammenbau der einzelnen Fensterrahmen bestimmten Aufeinanderfolge der Rahmenprofile für jedes einzelne der Rahmenprofile eine Strich-Codierung erstellt wird,
1.1 die Strich-Codierungen enthalten die jeweiligen Daten der unterschiedlichen Schraub- und Anschlagbearbeitung, der unterschiedlichen Schnittlängen und der verschiedenartigen Bestimmungsorte und -zwecke,
1.2 die einzelnen Rahmenprofile werden mit ihrer jeweils zugehörigen Strich-Codierung versehen und der Bearbeitungsvorrichtung (1) zugeführt, wo
1.3 die Informationen der Strich-Codierungen aufgenommen und der Steuereinrichtung (51) aufgegeben werden,
1.4 die Verstellung der Bearbeitungswerkzeuge (30,31,32) erfolgt abhängig von den durch die Strich-Codierung vorbestimmten Stellen für die anzubringenden Schließteile, die anzubringenden Aretierschrauben für die Befestigung der Verstärkungseinlagen, den Stellen der anzubringenden Kämpferverbindungs-Bohrungen.

2. Verfahren nach Anspruch 1, **dadurch gekennzeichnet**, daß mindestens zwei Bearbeitungswerkzeuge (z.B.30,31) gleichzeitig ein Rahmenprofil (10) bearbeiten, wobei eine Werkzeugkollision durch zeitlichen und örtlichen Positionsvergleich ausgeschlossen wird.

3. Verfahren nach Anspruch 2, **dadurch gekennzeichnet,** daß bei einer von der Bearbeitungsvorrichtung (1) durch Positionsvergleich erkannten Kollisionsgefahr dasjenige Bearbeitungswerkzeug (z.B.31) aus der Kollisionszone herausgesteuert wird, welches den Bearbeitungsvorgang mit der größeren Positionstoleranz auszuführen hat.

4. Verfahren nach Anspruch 3, **dadurch gekennzeichnet,** daß an einem Rahmenprofil (10) eines Blendrahmens flügelseitig durchzuführende Bearbeitungen mit Positionsvorrang gegenüber laibungsseitig durchzuführenden Bearbeitungen gesteuert werden.

5. Verfahren nach Anspruch 4, **dadurch gekennzeichnet,** daß bei laibungsseitig durchzuführenden Bearbeitungen die für die Befestigung von Verstärkungseinlagen vorgegebenen Bearbeitungen stets positionsnachrangig gegenüber allen anderen, auch flügelseitig durchzuführenden Bearbeitungen gesteuert werden.

6. Verfahren nach einem der Ansprüche 1 bis 5, **dadurch gekennzeichnet,** daß es mit Bearbeitungs- und/oder Fehlerprotokollierung durchgeführt wird.

7. Verfahren nach einem der Ansprüche 1 bis 6, **dadurch gekennzeichnet,** daß der Bearbeitungsvorrichtung (1) mit der Strich-Codierung (54) rahmeneinbauseitige Positionsvorgaben übermittelt werden.

8. Verfahren nach einem oder mehreren der Ansprüche 1 bis 7, **dadurch gekennzeichnet,** daß der Bearbeitungsvorrichtung (1) mit der Strich-Codierung (54) Daten für einen insgesamt zeitoptimierten Bearbeitungsablauf aller an einem Rahmenprofil (10) durchzuführenden Bearbeitungen übermittelt werden.

9. Verfahren nach einem oder mehreren der Ansprüche 1 bis 8, **dadurch gekennzeichnet,** daß die Steuerung der Bearbeitungswerkzeuge (z.B.30,31,32) in ihre Bearbeitungspositionen ab Zuführung eines Rahmenprofils (10) zur Bearbeitungsvorrichtung (1) erfolgt.

10. Verfahren nach Anspruch 9, **dadurch gekennzeichnet,** daß die Steuerung der Bearbeitungswerkzeuge (z.B.30,31,32) ab in der Bearbeitungsvorrichtung (1) erfolgtem Einlesen der Strich-Codierung des zugehörigen Rahmenprofils (10) durchgeführt wird.

11. Verfahren nach einem oder mehreren der Ansprüche 1 bis 10, **dadurch gekennzeichnet,** daß die Bearbeitungswerkzeuge (z.B.30,31) nach der Bearbeitung eines Rahmenprofils (10) zu einen vorbestimmten, vorzugsweise allen Werkzeugen gemeinsamen Nullpunkt bewegt werden, von dem aus die Bearbeitung des folgenden Rahmenprofils (10) durchgeführt wird.

12. Verfahren nach einem oder mehreren der Ansprüche 1 bis 11, **dadurch gekennzeichnet,** daß die Steuerung der Bearbeitungswerkzeuge (z.B.30,31,32) unter Ausnutzung der Zeit für eine Genaupositionierung einer Verstärkungseinlage (18) innerhalb eines Rahmenprofils (10) erfolgt.

13. Vorrichtung zur Durchführung des Verfahrens nach einem der Ansprüche 1 bis 12, bei welcher zwischen einem Zufuhrtransportband (6) und einem Abfuhrtransportband (7) für die Zu- und Abfuhr des Rahmenprofils (10) ein Bearbeitungsautomat (1) vorgesehen ist, **dadurch gekennzeichnet**, daß zwei parallele und hochkant stehende Förderbänder (9) vorgesehen sind, die den Bearbeitungsautomaten in seiner Längsrichtung durchlaufen und zwei mit Abstand nebeneinander liegende Fördertrume (9',9'') für das darauf aufliegende Rahmenprofil bilden, welches mittig zwischen den in Förderrichtung laufenden Fördertrumen (9',9'') von oben und unten frei zugänglich ist, und daß
13.1 ober- und unterhalb dieser Förderbänder (9) auf parallel dazu verschieblichen Schlitten (13,14) numerisch gesteuerte Bearbeitungswerkzeuge (z.B.30,31,32) sitzen, wobei
13.2 die Antriebsmotoren von einer Steuereinrichtung (51) gesteuert werden, die ihre Informationen von den einzelnen Rahmenprofilen (10) über ein Lesegerät (15) erhält.

14. Vorrichtung nach Anspruch 13, **dadurch gekennzeichnet,** daß am Auslauf der Förderbänder (9) ein quer zuführbarer Anschlag (16) für das Rahmenprofil (10) vorgesehen ist, sowie ein in das zugewandte Ende des Rahmenprofils einfahrbarer Positionierkolben (17) für die Genaupositionierung der im Rahmenprofil (10) vorhandenen Verstärkungseinlage (18).

15. Vorrichtung nach Anspruch 13 oder 14, **dadurch gekennzeichnet,** daß der Bearbeitungsautomat (1) mit mehreren in Abständen voneinander angeordneten, oberhalb des Förderbandes (9) angeordneten Niederhaltern (19) versehen ist, die das Rahmenprofil (10) in seiner am Anschlag (16) anliegenden Position vertikal einspannen, sowie mit Horizontalanschlägen (42) und gegenüberliegenden Spannelementen (20) zum horizontalen Quereinspannen der Rahmenprofile.

16. Vorrichtung nach einem der Ansprüche 13 bis 15**, dadurch gekennzeichnet,** daß ober- und unterhalb der parallelen Förderbänder (9) zwei -sich parallel dazu erstreckende Führungsschienen (11,12) für die darauf verschieblichen, die Bearbeitungswerkzeuge (z.B.30, 31) tragenden Schlitten, nämlich einen Ober- und Unterschlitten (13 bzw. 14) vorhanden sind.

17. Vorrichtung nach einem der Ansprüche 13 bis 16, **dadurch gekennzeichnet,** daß auf dem Oberschlitten (13) Schließteil-Magazine (21,23) und Einrichtungen (z.B.27,28) zur Einzelabgabe und zum Verschrauben der Schließteile (22, 24) auf dem Rahmenprofil (10) vorhanden sind.

18. Vorrichtung nach Anspruch 17, **dadurch gekennzeichnet,** daß auf dem Oberschlitten (13) auch ein Bohrkopf (29) zum Erzeugen von Bohrungen im Rahmenprofil (10) vorgesehen ist.

19. Vorrichtung nach Anspruch 16, **dadurch gekennzeichnet,** daß auf dem Unterschlitten (14) ein mit einem Arretierschrauben-Magazin zusammenwirkender Arretierschrauber (31) für das axial gesicherte Festschrauben der an ordnungsgemaßer Stelle im Rahmenprofil (10) positionierten Verstärkungseinlage (18) und/oder ein Dübellochbohrer (32) vorhanden sind.

20. Vorrichtung nach Anspruch 14, **dadurch gekennzeichnet,** daß der am Förderbandauslauf des Bearbeitungsautomaten (1') angeordnete Anschlag (16) und der Positionierkolben (17) aus der Förderbahn des Rahmenprofils (10) herausbeweglich sind.

21. Vorrichtung nach Anspruch 13, **dadurch gekennzeichnet,** daß mit den Verstärkungseinlagen (18) versehene Rahmenprofile (10) jeweils durch Einzelabkippen vom Zufuhr-Transportband (6,6') auf die den Bearbeitungsautomaten (1) durchlaufenden Förderbänder (9) und nach der Bearbeitung von letzterem auf das Abfuhr-Transportband (7) zu überführen sind.

22. Vorrichtung nach einem der Ansprüche 13 bis 21**, dadurch gekennzeichnet**, daß sie einen Scanner (15) zum Einlesen der Strich-Codierung in eine Steuereinrichtung (51) des Bearbeitungsautomatens (1) hat, an dessen Förderbandeinlauf der Scanner (15) angeordnet ist.

23. Vorrichtung nach einem der Ansprüche 13 bis 22, **dadurch gekennzeichnet,** daß auf dem Oberschlitten (13) ein Magazin (21) für die Speicherung, Einzelabgabe oder -verschraubung von lediglich im Kunststoff des Rahmenprofils (10) zu befestigenden Rollenschließteilen (22) vorhanden ist.

24. Vorrichtung nach einem der Ansprüche 1 bis 23**, dadurch gekennzeichnet,** daß auf dem Oberschlitten (13) ein Magazin (23) für die Speicherung, Einzelabgabe oder -verschraubung von Sicherheitsschließteilen (24) vorhanden ist, die jeweils über zwei in die Metallverstärkungseinlage (18) des Rahmenprofils (10) einzudrehende Schrauben (35) zu befestigen sind.

25. Vorrichtung nach Anspruch 24**, dadurch gekennzeichnet,** daß die in die Metallverstärkungseinlage (18) des Rahmenprofils (10) einzudrehenden Schrauben (35) über Schraubenkanäle gegensinnig schräg zur Oberfläche eines Sicherheitsschließteils (24) zugeführt und daß die Schrauben (35) durch entsprechend schräg stehende automatische Schraubwerkzeuge eingedreht werden.

## Claims

1. Method for pre-assembling and pre-processing frame profiles which are intended for use in assembling window or door frames and which are provided with special metallic reinforcing inserts, in particular such frame profiles consisting of synthetic materials by means of a processing device (1) which is provided with processing tools (30, 31, 32), wherein a control device (51) controls the processing tools in such a manner that they are coordinated with respect to time and location such that in so doing the frame profiles (10) are processed differently lying in a temporarily fixed clamped position with inserted and length matched reinforcing inserts (18), wherein the processing is performed by processing tools which are adjusted appropriately with respect to location and time in the longitudinal direction of the frame profiles and transversely thereto, **characterised in**, that
- 1.0 irrespective of the sequence in which the frame profiles are to be assembled for the individual window frames a bar coding is produced for each individual part of the frame profiles,
- 1.1 the bar codings contain the relevant data relating to the different screw and stop processing, the different cut lengths and the different intended locations and purposes,
- 1.2 the individual frame profiles are provided with their respective associated bar coding and directed to the processing device (1), where
- 1.3 the information regarding the bar codings is received and passed to the control device (51),
- 1.4 the adjustment of the processing tools (30, 21, 32) is performed in dependence upon the locations as predetermined by the bar coding for the closing parts to be attached, the lock screws to be attached for the purpose of attaching the reinforcing inserts and upon the locations of the transom connection bores to be provided.

2. Method according to claim 1, characterised in that at least two processing tools (e.g. 30,31) simultaneously process one frame profile (10), wherein a comparison of their positions with respect to time and location prevent the tools from colliding.

3. Method according to claim 2, characterised in that in the event of a collision danger being recognised by the processing device (1) by means of comparing positions, that particular processing tool (e.g. 31) which has to perform the processing procedure with the greater positional tolerance is moved out of the collision zone.

4. Method according to claim 3, characterised in that the control of the processing to be performed on the wing side on a frame profile (10) of a window/door frame takes priority in terms of position over processing to be performed on the interior side.

5. Method according to claim 4, characterised in that when performing processing on the interior side the processing predetermined for the attachment of the reinforcing inserts is always controlled subordinately in terms of position with respect to all other processing which is to be carried out, even the processing to be carried out on the wing side.

6. Method according to any one of claims 1 to 5, characterised in that the processing and/or errors are logged.

7. Method according to any one of claims 1 to 6, characterised in that information relating to the position on the frame installation side is transmitted to the processing device (1) with the bar coding (54).

8. Method according to any one or several of claims 1 to 7, characterised in that data to enable all processing to be performed on a frame profile (10) to be carried out in a sequence which is optimized overall with respect to time is transmitted to the processing device (1) with the bar coding (54).

9. Method according to any one or several of claims 1 to 8, characterised in that the control of the processing tools (e.g. 30, 31, 32) into their processing positions is performed after a frame profile (10) has been presented to the processing device (1).

10. Method according to claim 9, characterised in that the control of the processing tools (e.g. 30, 31, 32) is performed after the bar coding of the associated frame profile (10) has been read into the processing device (1).

11. Method according to any one or several of claims 1 to 10, characterised in that after having processed a frame profile (10) the processing tools (e.g. 30, 31) are moved to a predetermined zero point which is preferably common for all tools, from which point the processing of the subsequent frame profile (10) is performed.

12. Method according to any one or several of claims 1 to 11, characterised in that the control of the processing tools (e.g. 30, 31, 32) is performed whilst exploiting the time for a precise positioning of a reinforcing insert (18) within a frame profile (10).

13. Device for the purpose of implementing the method according to any one of claims 1 to 12, wherein a processing device (1) is provided between a feed conveyor belt (6) and a discharge conveyor belt (7) for the purpose of supplying and carrying off the frame profile (10), characterised in that two conveyor belts (9) which are parallel and stand on edge are provided, which conveyor belts (9) pass through the processing device in its longitudinal direction and form two winding compartments (9', 9'') lying at a spaced disposition adjacent to each other for the frame profile lying thereon, which frame profile can be accessed freely from above or below in the middle between the winding compartments (9', 9'') extending in the conveying direction, and that
13.1 above and below these conveyor belts (9) sit numerically controlled processing tools (e.g. 30, 31, 32) on slides (13,14) which are displaceable in parallel with said conveyor belts (9), wherein
13.2 the drive motors are controlled by a control device (51) which receives its information from the individual frame profiles (10) by way of a reading device (15).

14. Device according to claim 13, characterised in that provided at the outlet of the conveyor belts (9) is a stop (16) which can be moved transversely for the frame profile (10), and a positioning piston (17) for the precise positioning of the reinforcing insert (18) which is provided in the frame profile (10), which positioning piston can be inserted into the facing end of the frame profile.

15. Device according to claim 13 or 14, characterised in that the processing device (1) is provided with several holding down devices (19), which are disposed at a spaced disposition with respect to each other above the conveyor belt (9) and which holding down devices clamp the frame profile (10) vertically in its position abutting the stop (16), and with horizontal stops (42) and opposite lying clamping elements (20) for the purpose of clamping the frame profiles in a horizontal transverse manner.

16. Device according to any one of claims 13 to 15, characterised in that above and below the parallel conveyor belts (9) are provided two guide rails (11,12) which extend parallel thereto for the slides, which are displaceable thereon and which carry the processing tools (e.g. 30, 31), namely an upper and lower slide (13 or 14).

17. Device according to any one of claims 13 to 16, characterised in that closing part magazines (21, 23) and devices (e.g. 27, 28) for the purpose of individually discharging and for screwing the closing parts (22, 24) on the frame profile (10) are provided on the upper slide (13).

18. Device according to claim 17, characterised in that a bore head (29) is also provided on the upper slide (13) for the purpose of boring into the frame profile (10).

19. Device according to claim 16, characterised in that provided on the lower slide (14) are a locking screw tool (31), which cooperates with a locking screw magazine, for the purpose of fixedly screwing in an axially secured manner the reinforcing insert (18) which is positioned in the correct location on the frame profile (10), and/or a dowel-hole borer (32).

20. Device according to claim 14, characterised in that the stop (16) disposed on the conveyor belt outlet of the processing device (1') and the positioning piston (17) can be moved out of the conveyor belt of the frame profile (10).

21. Device according to claim 13, characterised in that frame profiles (10) provided with reinforcing inserts (18) are to be transferred in each case by being individually tipped off the feed conveyor belt (6, 6') onto the conveyor belts (9), which pass through the processing devices (1), and after processing are transferred from said conveyor belt (9) to the discharge conveyor belt (7).

22. Device according to any one of claims 13 to 21, characterised in that it comprises a scanner (15) for the purpose of reading the bar coding into a control device (51) of the processing device (1) and the scanner (15) is disposed at the conveyor belt inlet of the processing device (1).

23. Device according to any one of claims 13 to 22, characterised in that provided on the upper slide (13) is a magazine (21) for the storing, individual discharge or screwing of roller closing parts (22) which are to be attached only in the synthetic material of the frame profile (10).

24. Device according to any one of claims 1 to 23, characterised in that provided on the upper slide (13) is a magazine (23) for the storing, individual discharge or screwing of security closing parts (24) which are to be attached in each case by way of two screws (35) which are to be screwed into the metal reinforcing insert (18) of the frame profile (10).

25. Device according to claim 24, characterised in that the screws (35) to be screwed into the metal reinforcing insert (18) of the frame profile (10) by way of the screw channels are supplied inclined in the opposite direction with respect to the surface of a security closing part (24) and that the screws (35) are screwed in by means of correspondingly inclined automatic screw tools.

## Revendications

1. Procédé pour le pré-montage et le pré-usinage de profilés de châssis qui sont destinés à l'assemblage de châssis de fenêtre ou de porte et qui sont pourvus de pièces de renforcement notamment métalliques, en particulier de profilés de châssis en matière plastique, à l'aide d'un dispositif d'usinage (1) pourvu d'outils d'usinage (30, 31, 32), ces outils d'usinage étant commandés par un dispositif de commande (51), en étant coordonnés dans le temps et dans l'espace, de telle sorte que les profilés de châssis (10), couchés dans une position de serrage temporairement fixe et contenant des pièces de renforcement (18) introduites par coulissement et d'une longueur adaptée, subissent des usinages différents, étant précisé que l'usinage se fait à l'aide d'outils d'usinage qui sont déplacés en conséquence, localement et latéralement, dans le sens longitudinal des profilés de châssis et transversalement par rapport à ceux-ci, **caractérisé en ce que**
1.0 un code barres est réalisé pour chacun des profilés de châssis, indépendamment de la succession des profilés de châssis prévue pour l'assemblage des différents châssis de fenêtre,
1.1 les codes barres contiennent les données relatives aux différents usinages par vissage et clouage, aux différentes longueurs de coupe et aux différents lieux de destination et usages,
1.2 les différents profilés de châssis sont pourvus de leur code barres respectif et sont amenés dans le dispositif d'usinage (1), où
1.3 les informations des codes barres sont enregistrées et transmises au dispositif de commande (51),
1.4 le déplacement des outils d'usinage (30, 31, 32) a lieu en fonction des endroits prédéfinis par le code barres pour les pièces de fermeture à fixer, pour les vis d'arrêt à fixer en vue de la fixation des pièces de renforcement, et des emplacements des perçages à réaliser pour la liaison de la traverse d'imposte.

2. Procédé selon la revendication 1, **caractérisé** en ce qu'au moins deux outils d'usinage (par exemple 30, 31) usinent simultanément un profité de châssis (10), une collision entre les outils étant exclue grâce à une comparaison des positions dans le temps et dans l'espace.

3. Procédé selon la revendication 2, **caractérisé** en ce que si un risque de collision est détecté par le dispositif d'usinage (1) grâce à la comparaison de positions, on fait sortir de la zone de collision l'outil d'usinage (par exemple 31) qui doit effectuer l'opération d'usinage avec la tolérance de position la plus grande.

4. Procédé selon la revendication 3, **caractérisé** en ce que sur un profité de châssis (10) d'un dormant, les usinages à effectuer côté battant sont commandés avec une priorité de position par rapport aux usinages à effectuer côté ébrasement.

5. Procédé selon la revendication 4, **caractérisé** en ce que pour les usinages à effectuer côté ébrasement, les usinages prédéfinis pour la fixation de pièces de renforcement sont toujours commandés de façon non prioritaire par rapport à tous les autres usinages, même à ceux à effectuer côté battant.

6. Procédé selon l'une des revendications 1 à 5, **caractérisé** en ce qu'il est mis en oeuvre avec une consignation d'usinage et/ou de défauts.

7. Procédé selon l'une des revendications 1 à 6, **caractérisé** en ce que des positions de consigne, côté montage du châssis, sont transmises au dispositif d'usinage (1) avec le code barres (54).

8. Procédé selon l'une au moins des revendications 1 à 7, **caractérisé** en ce que des données pour un déroulement globalement optimisé dans le temps de tous les usinages à effectuer sur un profité de châssis (10) sont transmises au dispositif d'usinage (1) avec le code barres (54).

9. Procédé selon l'une au moins des revendications 1 à 8, **caractérisé** en ce que la commande des outils d'usinage (par exemple 30, 31, 32) vers leurs positions d'usinage a lieu à partir de l'amenée d'un profité de châssis (10) vers le dispositif d'usinage (1).

10. Procédé selon la revendication 9, **caractérisé** en ce que la commande des outils d'usinage (par exemple 30, 31, 32) est effectuée à partir de la mise en mémoire, dans le dispositif d'usinage (1), du code barres du profilé de châssis (10) correspondant.

11. Procédé selon l'une au moins des revendications 1 à 10, **caractérisé** en ce que les outils d'usinage (par exemple 30, 31), après l'usinage d'un profilé de châssis (10), sont amenés à un point zéro prédéfini, de préférence commun à tous les outils, à partir duquel l'usinage du profilé de châssis (10) suivant est effectué.

12. Procédé selon l'une au moins des revendications 1 à 11, **caractérisé** en ce que la commande des outils d'usinage (par exemple 30, 31, 32) se fait en utilisant le temps nécessaire à un positionnement exact d'une pièce de renforcement (18) à l'intérieur d'un profilé de châssis (10)

13. Dispositif pour la mise en oeuvre du procédé selon l'une des revendications 1 à 12, dans lequel on prévoit une machine automatique d'usinage (1) entre une bande transporteuse d'amenée (6) et une bande transporteuse d'évacuation (7) destinées à amener et à évacuer le profilé de châssis (10, **caractérisé** en ce qu'il est prévu deux bandes transporteuses (9) parallèles et posées sur chant, qui traversent la machine automatique d'usinage longitudinalement et qui forment deux brins transporteurs (9', 9'') espacés l'un à côté de l'autre pour le profilé de châssis posés sur eux, lequel profilé de châssis est librement accessible au milieu, par le haut et par le bas, entre les brins transporteurs (9', 9'') qui se déplacent dans le sens de transport, et en ce que
13.1 il est prévu au-dessus et au-dessous de ces bandes transporteuses (9), sur des chariots (13, 14) mobiles parallèlement à celles-ci, des outils d'usinage (par exemple 30, 31, 32) à commande numérique, étant précisé que
13.2 les moteurs d'entraînement sont commandés par un dispositif de commande (51) qui reçoit ses informations des différents profilés de châssis (10), grâce à un lecteur (15).

14. Dispositif selon la revendication 13, **caractérisé** en ce qu'il est prévu, à la sortie des bandes transporteuses (9), une butée (16) pour le profilé de châssis (10), apte à être amenée transversalement, et un piston de positionnement (17), apte à être introduit dans l'extrémité du profilé de châssis tournée vers ledit piston, pour le positionnement exact de la pièce de renforcement (18) prévue dans le profilé de châssis (10) .

15. Dispositif selon la revendication 13 ou 14, **caractérisé** en ce que la machine automatique d'usinage (1) est pourvue de plusieurs abaisseurs (19), espacés les uns des autres et disposés au-dessus de la bande transporteuse (9), qui serrent à la verticale le profilé de châssis (10) dans sa position appliquée contre la butée (16), ainsi que de butées horizontales (42) et d'éléments de serrage opposés (20) destinés au serrage transversal horizontal des profilés de châssis.

16. Dispositif selon l'une des revendications 13 à 15, **caractérisé** en ce qu'il est prévu, au-dessus et audessous des bandes transporteuses parallèles (9), deux rails de guidage (11, 12) parallèles à celles-ci, pour les chariots qui portent les outils d'usinage (par exemple 30, 31) mobiles sur lesdits rails, à savoir un chariot supérieur et un chariot inférieur (13, 14).

17. Dispositif selon l'une des revendications 13 à 16, **caractérisé** en ce qu'il est prévu sur le chariot supérieur (13) des magasins de pièces de fermeture (21, 23) et des dispositifs (par exemple 27, 28) pour la distribution individuelle et le vissage des pièces de fermeture (22, 24) sur le profilé de châssis (10).

18. Dispositif selon la revendication 17, **caractérisé** en ce qu'il est également prévu sur le chariot supérieur (13) une tête de perçage (29) pour former des perçages dans le profilé de châssis (10).

19. Dispositif selon la revendication 16, **caractérisé** en ce qu'il est prévu sur le chariot inférieur (14) une visseuse (31) qui coopère avec un magasin de vis d'arrêt, pour le vissage bloqué axialement de la pièce de renforcement (18) positionnée correctement dans le profilé de châssis (10), et/ou un foret pour chevilles (32).

20. Dispositif selon la revendication 14, **caractérisé** en ce que la butée (16) disposée à la sortie de la bande transporteuse de la machine automatique d'usinage (1') et le piston de positionnement (17) sont aptes à sortir de la trajectoire de transport du profilé de châssis (10).

21. Dispositif selon la revendication 13, **caractérisé** en ce que des profilés de châssis (10) pourvus des pièces de renforcement (18) doivent être transférés grâce à un basculement individuel de la bande transporteuse d'amenée (6, 6') sur les bandes transporteuses (9) qui traversent la machine automatique d'usinage (1) et, après l'usinage, sur la bande transporteuse d'évacuation (7).

22. Dispositif selon l'une des revendications 13 à 21, **caractérisé** en ce qu'il comporte un scanner (15) pour mettre en mémoire le code barres dans un dispositif de commande (51) de la machine automatique d'usinage (1), à l'entrée de bande transporteuse duquel le scanner (15) est disposé.

23. Dispositif selon l'une des revendications 13 à 22, **caractérisé** en ce qu'il est prévu sur le chariot supérieur (13) un magasin (21) pour le stockage, la distribution individuelle ou le vissage individuel de pièces de fermeture en forme de rouleaux (22) à fixer seulement dans la matière plastique du profilé de châssis (10).

24. Dispositif selon l'une des revendications 1 à 23, **caractérisé** en ce qu'il est prévu sur le chariot supérieur (13) un magasin (23) pour le stockage, la distribution individuelle ou le vissage individuel de pièces de fermeture de sécurité (24) qui doivent être fixées chacune grâce à deux vis (35) à visser dans la pièce de renforcement métallique (18) du profilé de châssis (10).

25. Dispositif selon la revendication 24, **caractérisé** en ce que les vis (35) à visser dans la pièce de renforcement métallique (18) du profilé de châssis (10) sont amenées grâce à des conduits de vis en sens inverse et en biais par rapport à la surface d'une pièce de fermeture de sécurité (24), et en ce que les vis (35) sont vissées par des outils de vissage automatiques disposés en biais en conséquence.
